# EUROPÄISCHE PATENTANMELDUNG

(11) **EP 0 708 321 A1**
(43) Veröffentlichungstag der Anmeldung: **24.04.1996**
(21) Anmeldenummer: 94116324.8
(22) Anmeldetag: 17.10.1994
(51) Int. Cl.: G01N 1/32, B24B 1/00

(54) **Vorrichtung zum Aufbringen von Schliffkalotten**

(71) Anmelder: Verschleiss- Schutz-Technik Dr. Ing. Klaus Keller, D-79650 Schopfheim (DE)
(72) Erfinder: Steffens, Günter, Dipl.-Ing., D-79650 Schopfheim (DE); Zumkeller-Neidlinger, Michael, D-79541 Lörrach (DE)
(74) Vertreter: Füchsle, Klaus, Dipl.-Ing.

(57) **Zusammenfassung**

Eine Vorrichtung zum Aufbringen von Schliffkalotten weist einen auf einem Meßobjekt rotierbaren Schleifkörper (1) und eine Antriebsübertragungseinrichtung (2, 2') auf, die mit dem Schleifkörper (1) antreibend in Berührung steht. Zwischen der Antriebsübertragungseinrichtung (2, 2') und dem Schleifkörper sind zumindest drei Berührungspunkte vorgesehen. Ferner ist eine Halteeinrichtung (8, 10; 12, 14, 16) vorgesehen, welche die Antriebsübertragungseinrichtung (2, 2') zum Meßobjekt relativ verstellbar lagert.

## Beschreibung

Die vorliegende Erfindung betrifft eine Vorrichtung zum Aufbringen von Schliffkalotten nach dem Oberbegriff des Anspruchs 1.

Derartige Vorrichtungen dienen dazu, die Schichtdicke von Oberflächenschichten nach dem Kalottenschleifverfahren zu bestimmen. Die Grundlagen des Kalottenschleifverfahrens sind in dem DIN-Fachbericht 39 "Charakterisierung dünner Schichten", Kapitel 2.2, herausgegeben vom Deutschen Institut für Normung e.V. Beuth Verlag 1993 beschrieben. Dieser Bericht wird hiermit ausdrücklich mit zum Gegenstand der vorliegenden Anmeldung gemacht.

Das im obengenannten Bericht beschriebene Kalottenschleifverfahren ist ein metallografisches Prüfverfahren, bei dem ein meist kugelförmiger oder zylindrischer Schleifkörper in ein beschichtetes Meßobjekt eingeschliffen wird. Der Prüfvorgang wird vorteilhafterweise mit einer Stahlkugel mit definiertem Durchmesser durchgeführt, die mit einer alkoholisch gelösten Diamantsuspension benetzt wird. Nach dem Einschleifen der Stahlkugel entstehen verschiedene Muster, in Planflächen konzentrische Kreise oder auf zylindrische Flächen konzentrische Ellipsen, die den verschiedenen aufgebrachten Schichten bzw. unterschiedlichen Strukturen des Grundwerkstoffes entsprechen. Mit Hilfe der Ringdurchmesser bzw. der Ellipsenhalbmesser, die mit einem Mikroskop festgestellt werden, kann dann mit Hilfe der geometrischen Verhältnisse auf die Schichtdicken bzw. auf die Tiefe der Strukturen geschlossen werden.

Darüber hinaus können auch Schichtverzahnung, Homogenität und Kristallausbildung beobachtet werden, und insbesondere die Eigenschaften im Übergang (Interface) zwischen Substrat und aufgebrachter Schicht, die für die Tragfestigkeit und Haftsicherheit eines Schichtsystems auf dem Substrat in besonderer Weise verantwortlich ist. Zusätzliche Aussagen lassen sich darüber hinaus gewinnen, wenn die erzeugten Kalotten mikroskopisch fein auspoliert und verschiedene Ätztechniken angewandt werden, die eine Analyse der Gefügestruktur der Werkstoffe ermöglichen.

Somit erlauben Kalottenschleifverfahren eine Oberflächen- und Schichtanalytik von hoher Aussagekraft, insbesondere im Hinblick auf die Funktionstüchtigkeit unter hohen tribologischen Beanspruchungen.

Ein Kalottenprüfgerät nach dem Oberbegriff des Patentanspruchs 1 ist aus dem Katalog "CSEM Calotest" der Firma CSEM, Neuchatel (Schweiz) bekannt.

Bei diesem bekannten Prüfgerät liegt eine Dreipunktfixierung der Schleifkugel vor. Hierbei wird die Kugel auf einer von einem Riemen angetriebenen Welle gelagert, die mit einer V-Nut versehen ist. Das Meßobjekt befindet sich dabei auf einem schräg zur Horizontalen angeordneten Meßtisch, wodurch die Kugel einerseits an zwei Berührungspunkten in der V-Nut der angetriebenen Welle und andererseits auf dem Meßobjekt als drittem Berührungspunkt lagert. Die Kugel wird mittels Reibung über die Welle angetrieben, wobei der dritte Berührungspunkt auf dem Meßobjekt die gewünschte Kalotte erzeugt. Hierbei ist die Kugel das eigentliche abrasive Element, das sich in der Dreipunktlagerung stets eine definierte Lage sucht.

Diese Dreipunktlagerung der Kugel bedingt jedoch, daß zwei Auflagepunkte antreibend sein müssen und der dritte Auflagepunkt die Reibstelle darstellt, an welcher in Folge der Relativbewegung zwischen Kugel und Meßobjekt die gewünschte Abtragung zu einer Kalotte stattfinden kann. Damit die Kugel überhaupt rotieren kann, muß die Reibungskraft an der Schliffstelle geringer sein als die Summe der Reibungskräfte an den beiden Antriebspunkten. Durch diese Konstruktion ist erforderlich, daß die zu untersuchende Schliffstelle eine besondere Schwerpunktlage zu den Antriebs-Berührungspunkten besitzt, da die Kugel ansonsten nicht mittels ihres Eigengewichtes fixiert ist. Dies wiederum hat jedoch zur Folge, daß der Schleifkörper nur mit einer konstanten (kleinen) Kraft in das Meßobjekt eingeschliffen werden kann. Ferner können mit dem obengenannten Prüfgerät nur sehr kleine Meßobjekte untersucht werden, die darüber hinaus in entsprechender Lage auf dem Prüfgerät montiert werden müssen.

Eine Untersuchung großer Werkstücke oder Werkzeuge, wie sie insbesondere im Kraftfahrzeugbau unabdinglich sind, ist jedoch aus den obengenannten Gründen nicht möglich. Dies ist um so bedauerlicher, als das Kalottenschleifverfahren insbesondere bei Großteilen (beispielsweise mit Dimensionen von mehreren Metern) besonders nützlich wäre, um zuverlässige Qualitätsprüfungen und Verhaltensprognosen machen zu können. Eine solche Untersuchung wäre insbesondere bei Bauteilen mit großem Schadenspotential von erheblicher Bedeutung.

Schließlich ist es auch nachteilig, daß die bislang bekannte Vorrichtung zum Aufbringen von Schliffkalotten nur eine relativ geringe Eindringtiefe erlaubt, da mit größer werdender Kalottenfläche die Reibmomente rasch ansteigen und die geringen übertragbaren Reibungskräfte begrenzt sind. Hierdurch ist eine Prüfung beispielsweise von Gußteilen mit nitrierten oder gehärteten Randschichten nicht möglich.

Es ist deshalb das der Erfindung zugrundeliegende Problem (Aufgabe), eine Vorrichtung nach dem Oberbegriff des Anspruchs 1 derart zu verbessern, daß es möglich ist, durch den Schleifkörper eine über dessen Eigengewicht hinausgehende Kraft aufzubringen, wobei gleichzeitig in beliebiger Lage eine Untersuchung von Meßobjekten nahezu beliebiger Größe und Form gewährleistet sein soll.

Die Lösung dieser Aufgabe erfolgt durch die Merkmale des Anspruchs 1.

Erfindungsgemäß sind zwischen der Antriebsübertragungseinrichtung, die mit dem Schleifkörper antreibend in Berührung steht, und dem Schleifkörper selbst zumindest drei, vorzugsweise jedoch vier Berührungspunkte vorgesehen, wobei ferner eine Halteeinrichtung vorgesehen ist, welche die Antriebsübertragungseinrichtung zum Meßobjekt relativ verstellbar lagert.

Durch die erfindungsgemäße Lösung ergibt sich der große Vorteil, daß die Vorrichtung in beliebiger Lage, beispielsweise auch über Kopf an das Meßobjekt angesetzt werden kann. Da der Schleifkörper über mindestens drei Berührungspunkte von der Antriebsübertragungseinrichtung gelagert wird, ist dessen Lage definitiv fixiert, und zwar durch die das Drehmoment übertragenden (mindestens) drei Antriebsstellen. Dank dieser definierten Schleifkörperlagerung können die Andruckkräfte auf den Schleifkörper über die (mindestens) drei Antriebsstellen beliebig erhöht werden, mit dem Ergebnis, daß die Anpreßkraft auf die Kalottenschliffstelle beliebig eingestellt werden kann.

Hierdurch lassen sich insbesondere wesentlich höhere und auch variable Reibmomente überwinden, als dies bei der vorbekannten Vorrichtung der Fall ist, wodurch in randnahen Bereichen bis zu 200 µm tiefe Kalotten in kürzester Zeit erstellt werden können. Durch die erfindungsgemäß vorgesehene Halteeinrichtung, welche die Antriebsübertragungseinrichtung zum Meßobjekt relativ verstellbar lagert, ist dabei gewährleistet, daß beispielsweise auch über Kopf kalottiert werden kann. Sofern die Halteeinrichtung mit einer vorbestimmten Kraft in Richtung des Meßobjektes vorgespannt wird, läßt sich die zu untersuchende Kalotte wesentlich schneller als nach dem Stand der Technik einschleifen.

Vorteilhafte Ausführungsformen der Erfindung sind durch die Unteransprüche gekennzeichnet.

So kann nach einer vorteilhaften Ausführungsform der Erfindung die Antriebsübertragungseinrichtung zwei Laufrollen aufweisen, von denen zumindest eine angetrieben ist. Insbesondere können die beiden Laufrollen auch von einem angetriebenen Laufrad, beispielsweise einem Reibrad aus Gummi, gemeinsam angetrieben werden. Hierdurch ergibt sich eine äußerst gleichmäßige Drehmomentübertragung auf den Schleifkörper, was für einen gleichmäßigen Schliff sorgt.

Nach einer weiteren Ausbildung der Erfindung können zwei angetriebene Laufrollen vorgesehen sein, die vier Berührungspunkte mit dem Schleifkörper bilden. Hierdurch wird die Zahl der Drehmomentübertragungspunkte verglichen zum Stand der Technik verdoppelt und der Schleifkörper kann zwischen den vier Berührungspunkten der Laufrollen wie in einem Käfig gehalten werden, wodurch die fünfte Kontaktstelle zur Kalottierung frei im Raum gewählt werden kann. Gleichzeitig läßt sich die Anpreßkraft auf die Kalottenschliffstelle durch die Halteeinrichtung beliebig einstellen, wodurch sehr hohe Anpreßkräfte aufgebracht werden können.

Sofern die Achsen der beiden Laufrollen nicht parallel verlaufen, wird auf dem Schleifkörper ein Meridianversatz erzeugt. Hierdurch wird bei Verwendung einer Kugel als Schleifkörper neben der Hauptdrehrichtung der Kugel noch ein Seitendrall erzeugt, der eine absolut gleichmäßige Abnutzung der Kugel bewirkt, was wiederum für eine hervorragende Konzentrizität der Kalotten sorgt.

Nach einer weiteren Ausführungsform der Erfindung kann die Halteeinrichtung einen Führungsschlitten oder eine Wippe aufweisen, der beziehungsweise die durch Eigengewicht oder durch Federwirkung eine Kraft auf den Schleifkörper ausübt. Durch eine derartig ausgebildete Halteeinrichtung läßt sich entweder durch Schwerkraft oder durch die vorgesehene Feder die Anpreßkraft des Schleifkörpers erhöhen, wobei gleichzeitig die Antriebsübertragungseinrichtung mit zunehmender Schlifftiefe nachgeführt wird. Insbesondere, wenn die Federkraft oder der Federweg einstellbar sind, lassen sich genau definierte Kalottenschliffe erzeugen, wobei bereits durch das Gewicht der Antriebsübertragungseinrichtung sowie des Führungsschlittens beziehungsweise der Wippe in sehr kurzer Zeit kalottiert werden kann.

Nach einer weiteren Ausbildung der Erfindung weist die Halteeinrichtung ein mehrgelenkiges Gelenkstativ auf, dessen Gelenke vorzugsweise mit nur einem Betätigungselement fixiert werden können. Hierdurch läßt sich die Antriebsübertragungseinrichtung auf einfache Weise an beliebigen Punkten des Meßobjektes anordnen. Insbesondere, wenn die Halteeinrichtung einen Magnetfuß aufweist, läßt sich die erfindungsgemäße Vorrichtung bei metallischen Werkstücken äußerst leicht fixieren.

Durch die erfindungsgemäße Ausbildung der Vorrichtung zum Aufbringen von Schliffkalotten läßt sich der Schleifkörper sowohl mit sehr niedrigen Geschwindigkeiten wie beispielsweise 0,1 U/min, wie auch mit sehr hohen Geschwindigkeiten wie beispielsweise 3000 U/min in Links- und Rechtslauf antreiben. Hierdurch ist die erfindungsgemäße Vorrichtung sehr flexibel.

Nach einer weiteren Ausbildung der Erfindung kann eine Kraftmeßeinrichtung vorgesehen sein, welche die Kraft zwischen der Antriebsübertragungseinrichtung und dem Schleifkörper mißt. Hierdurch lassen sich besonders genau definierte Kalotten ausbilden.

Nach einer weiteren Ausbildung der Erfindung kann der Abstand zwischen den Achsen der Laufrollen einstellbar sein. Dies erweist sich insbesondere bei unterschiedlich dicken Schichten als vorteilhaft. So ist es beispielsweise bei der Analyse sehr dünner Oberflächenschichten erwünscht, Schleifkörper mit großem Radius einzusetzen. Ist hingegen ein möglichst tiefes Eindringen des Schleifkörpers in das Meßobjekt beabsichtigt, so sollte ein Schleifkörper mit geringen Abmessungen eingesetzt werden.

Nachfolgend wird die vorliegende Erfindung rein beispielhaft anhand einer vorteilhaften Ausführungsform beschrieben. Es zeigen
- Fig. 1: eine perspektivische Ansicht der erfindungsgemäßen Vorrichtung;
- Fig. 2: die Vorderansicht und die Seitenansicht eines Teils der erfindungsgemäßen Vorrichtung von Fig. 1;
- Fig. 3: eine Detailansicht der in Fig. 2 dargestellten Vorrichtung;
- Fig. 4: einen Querschnitt durch den kugelförmigen Schleifkörper und die Laufrollen;
- Fig. 5: einen Querschnitt durch eine weitere Ausführungsform mit nichtparallelen Achsen der Antriebsrollen;
- Fig. 6: einen Querschnitt durch den zylindrischen Schleifkörper und die Laufrollen;
- Fig. 7: eine Aufsicht auf eine Kalotte, erzeugt durch einen kugelförmigen Schleifkörper; und
- Fig. 8: eine Aufsicht auf eine Kalotte, erzeugt durch einen zylindrischen Schleifkörper.

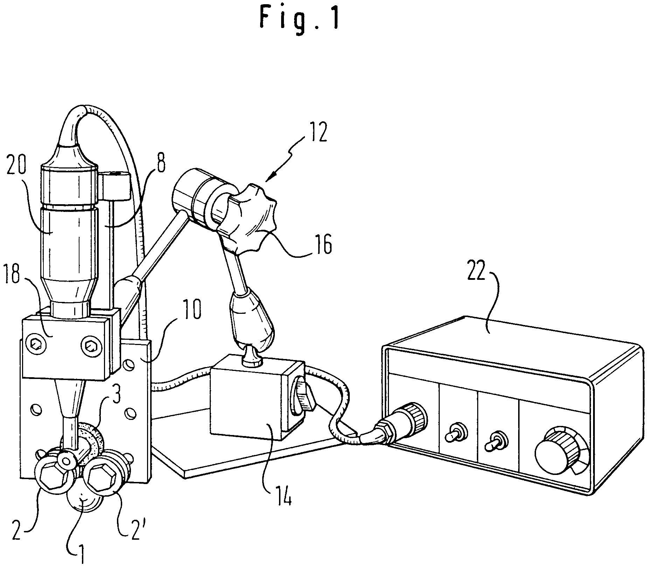

Fig. 1 zeigt eine perspektivische Ansicht der erfindungsgemäßen Vorrichtung zum Aufbringen von Schliffkalotten. Die Vorrichtung weist ein mehrgelenkiges Gelenkstativ 12 auf, das an einem Magnetfuß 14 befestigt ist. Das Gelenkstativ 12 besitzt an seinen beiden Enden jeweils ein Kugelgelenk sowie in der Mitte ein Drehgelenk. Sämtliche Gelenke sind mit einem Betätigungselement in Form eines kleinen Handrades 16 zentral hydraulisch lösbar.

Am vorderen Ende des Gelenkstativs 12 ist eine Grundplatte 8 befestigt, an der ein Schlitten 10 verschiebbar angeordnet ist. Auf dem Schlitten 10 befindet sich ferner eine Halterung 18 für einen Motor 20, der über ein Steuergerät 22 regelbar angetrieben wird.

Der Motor 20 treibt über ein Getriebe ein Reibrad 3 aus Gummi an, das wiederum zwei Laufrollen 2 und 2' in Drehung versetzt. Die Laufrollen 2, 2' sind jeweils mit einer V-förmigen Nut versehen, in welche das Reibrad 3 eingreift. Gehalten von den Laufrollen 2 und 2' läßt sich ein Schleifkörper in Form einer Schleifkugel 1 in Drehung versetzen, wie nachfolgend noch näher beschrieben wird.

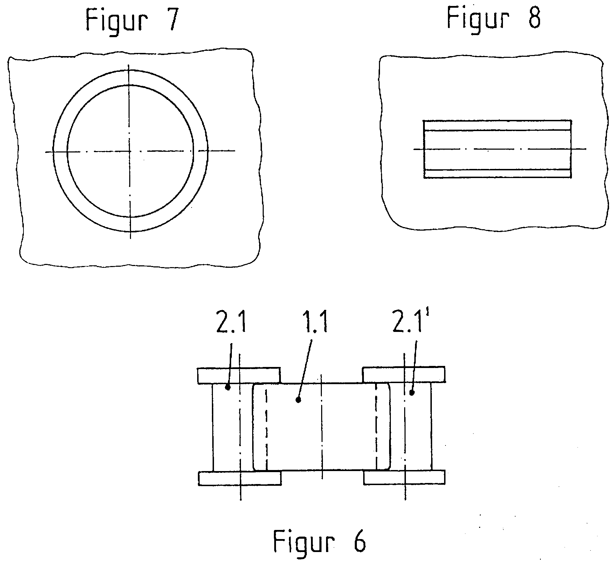

Bei Verwendung eines zylindrischen Schleifkörpers 1.1 wie in Fig. 6 gezeigt, wird dieser durch zwei Laufrollen 2.1 und 2.1, die eine rechteckförmige Nut aufweisen, angetrieben. Dabei bildet sich im Gegensatz zu der in Fig. 7 gezeigten Kreiskalotte eine rechteckige Kalotte aus, die in Fig. 8 dargestellt ist.

Der Motor 20 läßt sich mit einer Geschwindigkeit zwischen 0,1 U/min und 3000 U/min antreiben, wobei die Drehrichtung des Motors umkehrbar oder periodisch alternierend umkehrbar ist. Nach Einschleifen einer Kalotte kann der Motor 20 aus der Halterung 18 entnommen werden und mit einem Polieraufsatz versehen werden. Hierdurch kann anschließend die ausgebildete Kalotte poliert werden, wenn dies erforderlich sein sollte.

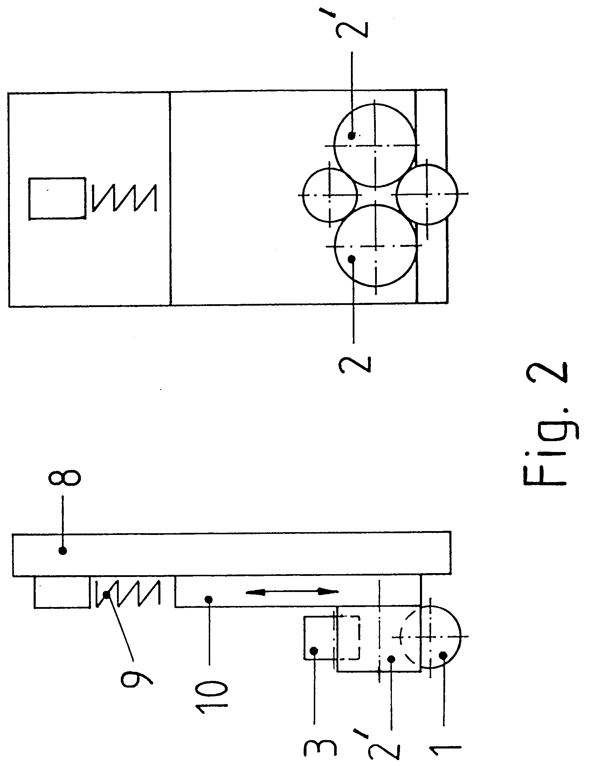

Fig. 2 zeigt eine Vorderansicht und eine Seitenansicht eines Teils der erfindungsgemäßen Vorrichtung von Fig. 1. Die Schleifkugel aus 100 Cr 6 wird von den beiden Laufrollen 2 und 2' als Antriebsübertragungseinrichtung durch Reibschluß in Rotation versetzt. Die beiden Laufrollen 2, 2' werden dabei über das Reibrad 3 angetrieben, das von dem Motor 20 in Rotation versetzt wird. Die Laufrollen 2, 2' und das Reibrad 3 sind jeweils mit parallelen Achsen auf dem Schlitten 10 befestigt, der verschiebbar auf der Grundplatte 8 angeordnet ist. Durch eine Feder 9 wird der Führungsschlitten 10 in Fig. 2 nach unten gedrückt. Gleichzeitig kann der Schlitten 10 durch die Feder 9 gegen seine Gewichtskraft gehalten und auch mit definierter Vorspannung in Richtung des Meßobjektes gedrückt werden. Es sei jedoch festgestellt, daß zur Durchführung der Erfindung auch bereits eine durch die Fixierung des Gelenkstativs o.ä. aufgebrachte Vorspannung ausreicht, ohne daß der Schlitten 10 oder die Feder 9 erforderlich wären.

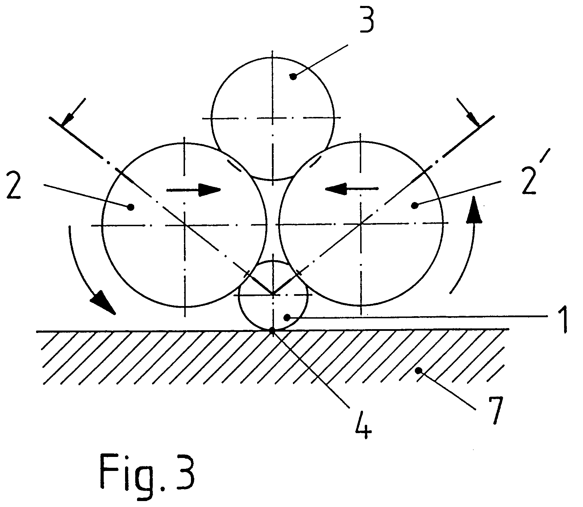

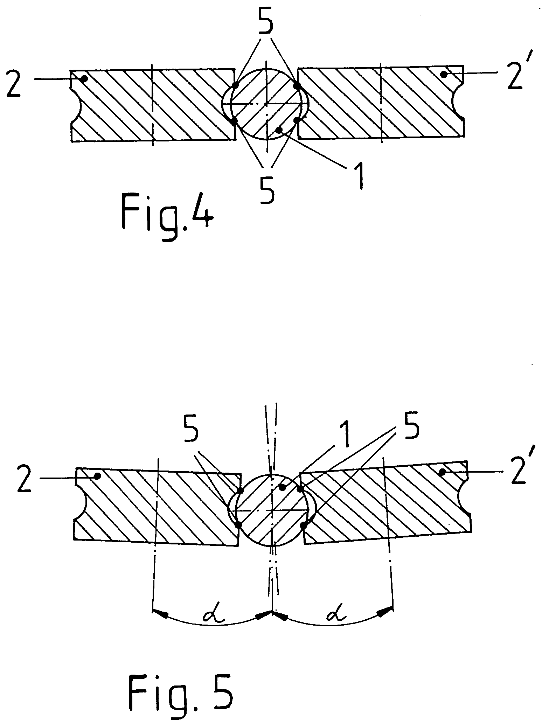

Fig. 3 zeigt im Detail die Position der Schleifkugel 1 in der Anordnung gemäß Fig. 2. Die Schleifkugel 1 berührt beide Laufrollen 2 an vier Berührungspunkten 5 (vgl. Fig. 4), da die Laufrollen 2 mit einer Ringnut versehen sind. Durch das angetriebene Laufrad 3, das in die Ringnuten der Laufrollen 2, 2' eingreift, werden diese entgegen dem Uhrzeigersinn gedreht und übertragen diese Drehung auf die Schleifkugel 1. Hierbei bildet sich in dem Eindringbereich 4 auf dem Meßobjekt 7 eine Kalotte. Dabei wird die Schleifkugel 1 durch die vier Berührungsstellen 5 mit den Laufrollen 2, 2' sowie durch die Berührungsstelle 4 mit dem Meßobjekt 7 in einer definierten Lage gehalten. Um die Verwendung verschiedener Schleifkugeln 1 mit unterschiedlichem Durchmesser zu ermöglichen, kann der axiale Abstand der Laufrollen 2, 2' variiert werden.

Fig. 4 zeigt einen Querschnitt durch die Schleifkugel 1, die sich zwischen den ebenfalls geschnitten dargestellten Laufrollen 2, 2' befindet. Wie gut zu erkennen ist, sind beide Laufrollen 2, 2' mit einer Ringnut versehen, so daß sich insgesamt vier Berührungsstellen 5 zwischen der Schleifkugel 1 und den Laufrollen 2, 2' ergeben. Selbstverständlich ist die Erfindung nicht auf die dargestellte Form der Ringnut beschränkt.

Fig. 5 zeigt eine weitere Ausführungsform der Erfindung, bei der die Achsen der Laufrollen 2, 2' nicht parallel verlaufen, sondern unter einem Winkel α zueinander geneigt sind. Hierdurch läßt sich bei kugelförmigen Schleifkörpern und Antrieb der Laufrollen 2, 2' eine zusätzliche Querrotation der Schleifkugel 1 erzeugen, die für eine vollkommen gleichmäßige Abnutzung der Schleifkugel 1 sorgt.

Nachfolgend wird die Betriebsweise der erfindungsgemäßen Vorrichtung beschrieben.

Zu Beginn des Kalottiervorgangs wird der Magnetfuß 14 des Gelenkstativs 12 in der Nähe derjenigen Stelle auf dem Meßobjekt befestigt, an der eine Messung vorgenommen werden soll. Durch Lösen des Handrades 16 läßt sich dann die am Ende des Gelenkstativs 12 befindliche Einheit aus Motor 20, Grundplatte 8 und Schlitten 10 so positionieren, daß die Schleifkugel 1 an der gewünschten Stelle 4 in beliebiger Position angeordnet wird. Nach Festziehen des Handrades 16 befindet sich die Vorrichtung beispielsweise in einer in Fig. 1 dargestellten Stellung. Durch das Eigengewicht des Schlittens 10 sowie des Motors 20 und der übrigen mit dem Schlitten verbundenen Teile wird auf die Schleifkugel 1 eine Anpreßkraft ausgeübt, die deren Eigengewicht beträchtlich übersteigt. Hierdurch läßt sich durch Drehen des Motors 20 in kürzester Zeit eine tiefe Kalotte ausbilden. Hierbei wird in herkömmlicher Weise die Schleifkugel mit einer alkoholisch gelösten Diamantsuspension benetzt.

Nach Ausbilden der Kalotte wird der Gelenkarm weggeschwenkt und die Schleifkugel 1 entfernt. Anschließend kann durch Vermessen der Kalotte mit einem Mikroskop die gewünschte Messung erfolgen. Sofern nach dem Vermessen mit dem Mikroskop noch ein Polieren erwünscht wird, läßt sich dies auf einfache Weise bewerkstelligen, indem der Motor 20 aus der Halterung 18 entfernt wird und mit einem Polieraufsatz versehen wird.

## Patentansprüche

1. Vorrichtung zum Aufbringen von Schliffkalotten, mit
- einem an einem Meßobjekt (7) in reibendem Kontakt rotierbaren Schleifkörper (1, 1.1), und
- einer Antriebsübertragungseinrichtung (2, 2'; 2.1, 2.1'), die mit dem Schleifkörper (1, 1.1) antreibend in Berührung steht,
dadurch gekennzeichnet daß
- zwischen Antriebsübertragungseinrichtung (2, 2'; 2.1, 2.1') und Schleifkörper (1, 1.1) zumindest drei, vorzugsweise vier Berührungspunkte (5) bzw. Berührungslinien vorgesehen sind, und
- eine Halteeinrichtung (8, 10; 12, 14, 16) vorgesehen ist, welche die Antriebsübertragungseinrichtung (2, 2'; 2.1, 2.1') zum Meßobjekt (7) relativ verstellbar lagert.

2. Vorrichtung nach Anspruch 1, dadurch gekennzeichnet, daß die Antriebsübertragungseinrichtung zwei Laufrollen (2, 2'; 2.1, 2.1') aufweist, von denen zumindest eine angetrieben ist.

3. Vorrichtung nach Anspruch 2, dadurch gekennzeichnet, daß zwei Laufrollen (2, 2'; 2.1, 2.1') von einem angetriebenen Laufrad (3) gemeinsam angetrieben werden.

4. Vorrichtung nach Anspruch 2, dadurch gekennzeichnet, daß mindestens eine Laufrolle (2, 2'; 2.1, 2.1') mehrere Berührungspunkte (5) mit dem Schleifkörper (1) bildet.

5. Vorrichtung nach Anspruch 2, dadurch gekennzeichnet, daß zwei angetriebene Laufrollen (2, 2') vorgesehen sind, die vier Berührungspunkte (5) oder zwei Berührungslinien mit dem Schleifkörper (1, 1.1) bilden.

6. Vorrichtung nach Anspruch 5, dadurch gekennzeichnet, daß die Achsen der beiden Laufrollen (2, 2') nicht parallel verlaufen.

7. Vorrichtung nach Anspruch 1, dadurch gekennzeichnet, daß die Halteeinrichtung einen Schlitten (10) oder eine Wippe aufweist, der bzw. die durch Eigengewicht, Zusatzgewicht oder einstellbare Federkraft eine variierbare Kraft auf den Schleifkörper (1) ausübt.

8. Vorrichtung nach Anspruch 1, dadurch gekennzeichnet, daß die Halteeinrichtung ein mehrgelenkiges Gelenkstativ (12) aufweist, dessen Gelenke vorzusweise mit nur einem Betätigungselement (16) fixiert werden können.

9. Vorrichtung nach Anspruch 1, dadurch gekennzeichnet, daß die Antriebsübertragungseinrichtung mit einer Geschwindigkeit zwischen 0,1 U/min und 3000 U/min vorzugsweise in Links- und Rechtslauf antreibbar ist.

10. Vorrichtung nach Anspruch 1, dadurch gekennzeichnet, daß eine Meßeinrichtung vorgesehen ist, welche die Reibkraft bzw. Reibarbeit zwischen Schleifkörper und Meßobjekt mißt.

11. Vorrichtung nach Anspruch 2, dadurch gekennzeichnet, daß der Abstand zwischen den Achsen der Laufrollen einstellbar ist.

12. Vorrichtung nach Anspruch 1, dadurch gekennzeichnet, daß der Schleifkörper eine Kugel (1) oder ein Rotationszylinder (1.1) ist.
